# EUROPEAN PATENT APPLICATION

(11) **EP 3 357 376 A1**
(43) Date of publication of application: **08.08.2018**
(21) Application number: 17154424.0
(22) Date of filing: 02.02.2017
(51) Int. Cl.: A47F 7/30, G06Q 30/06, A47F 7/00

(54) **A DISPLAY STAND AND METHOD OF FURNITURE PRESENTATION**

(71) Applicant: Proff House Sp. z o.o., 81-363 Gdynia (PL)
(72) Inventor: KOLODZIEJSKI, Tomasz, 81-363 Gdynia (PL)
(74) Representative: Markieta, Jaroslaw Franciszek

(57) **Abstract**

A display stand (1) for presenting furniture elements containing at least one storage unit for storing furniture element mockups (21, 23, 24, 24', 25) and a moveable support frame (10) adapted for the mounting of furniture element mockups (21, 23, 24, 24', 25), the moveable support frame (10) and at least one storage unit for storing furniture element mockups (21, 23, 24, 24', 25) are adapted to move relative to each other, and furthermore the display stand (1) is fitted with mechanisms for transferring the furniture element mockups (21, 23, 24, 25) to and from the storage unit for furniture element mockups (21, 23, 24, 25) and the moveable support frame (10) characterized in that the mockups (21, 23, 24, 25) storage unit is adapted to store mockups (21, 23, 24, 24', 25) in such an orientation that the mockups inside the storage unit are stored at the height of the means for transporting the furniture element mockups (21, 23, 24, 24', 25) between the storage unit and the moveable support frame (10); the moveable support frame (10) is adapted to change the orientation of the mockups (24, 24') coming from at least one of the mockups (24, 24') storage units from that appropriate for placement in the storage unit to that appropriate for display. The subject of the invention is also the moveable support frame (10) and the method for mounting the furniture element mockups (24, 24').

## Description

The subject of the invention is a display stand and method of furniture presentation, in particular kitchen furniture.

Furniture display stands that enable quick changes in visual arrangement are used to present the offers of furniture stores.

European patent EP 2 531 063 discloses a device and method of furniture presentation - particularly of wooden decor - using a projector. The image from the projector is projected onto the furniture, which is arranged as needed. The surfaces of the furniture are adapted to the greatest extent possible to the arrangement being displayed by the projector, which creates the illusion of a change in decor. The device is fitted with at least one projector with a control unit, which allows selection of the decor presented on the surfaces of the furniture.

US patent US 6 216 890 discloses a device for presenting floor tiles, roof tiles, and other similar flat items using two storage units on either side of the exhibition. The storage units store the stacked tiles, and the platform located between them allows for transport of the tiles from one unit to the other. In the center part of the exhibition is a wall connecting the storage units, on which the image showing a potential arrangement is displayed. The mounted lighting allows evaluation of the tile under different lighting conditions. Because the tiles are transported vertically, their weight plays a significant role in choosing a transport mechanism. This solution is therefore fundamentally limited to relatively light tiles.

US patent application US2013325670 discloses an apparatus for the selection of shower frames and panes using storage units for these two elements. The shower frames and panes are mounted on sliding panels. Pulling out one panel with a frame and another with a pane allows visual assessment of combinations by the user. Selection of a shower frame is independent of selection of a shower pane.

European patent EP 2 881 905 discloses a self-service parcel terminal used to store parcels of different sizes and equipped with mechanisms for loading and unloading, weighing, and storing parcels. The self-service terminal can handle postal parcels or be used as a mailbox, vending machine, or storage locker for storing parcels. Transport of parcels inside the terminal is carried out by using a gripping mechanism and a lift system which allow parcels to be moved in groups or as single items between the slot for delivering parcels and the shelves for parcels.

German patent application DE 19 853 848 discloses a solution for presenting kitchen furniture that consists of a presentation module. The module comprises two vertical, perpendicular walls and a moveable element that can be moved parallel to one of the walls. At least one of the immoveable walls has a cleat, to which other cabinets with the appropriate fixtures can be attached.

US patent US 7'000'786 discloses a rotating visualization system showing various combinations of construction elements for kitchens and bathrooms, such as cabinets, countertops, kitchen panels, floor tiles, and wall tiles. The rotating visualization system contains a rotatably mounted cabinet display, a rotatably mounted countertop display above a cabinet display, and a rotatably mounted rear wall display above a countertop display. Users may rotate each of the displays separately, thus creating combinations of elements from each.

Patent DE 298 09 565 U1 reveals a system that enables arrangement of spaces such as bathrooms by using carts that operate together with storage units containing vertical samples of furniture elements. After all the appropriate vertical samples have been loaded onto the carts, they are manually arranged to create the visualization of a space. The whole process is time-consuming and does not allow the changing of cart elements such as bathroom fixtures, or horizontal elements such as the floor.

European patent application EP16169953 discloses exhibition stands fitted with a moveable frame that allows automatic mounting of sample furniture elements. Because the frame does not have rotating elements, horizontal furniture elements such as countertops must be placed on the frame vertically. This has a significant impact on the construction of the units that store these elements, which may be vertically arranged.

The gist of the invention is a display stand for presenting furniture elements containing at least one storage unit for storing furniture element mockups and a moveable support frame adapted for the mounting of furniture element mockups, the moveable support frame and at least one storage unit for storing furniture element mockups are adapted to move relative to each other, and furthermore the display stand is fitted with mechanisms for transferring the furniture element mockups to and from the storage unit for furniture element mockups and the moveable support frame. The display stand is further characterized in that the mockups storage unit is adapted to store mockups in such an orientation that the mockups inside the storage unit are stored at the height of the means for transporting the furniture element mockups between the storage unit and the moveable support frame; the moveable support frame is adapted to change the orientation of the mockups coming from at least one of the mockups storage units from that appropriate for placement in the storage unit to that appropriate for display.

Furthermore, the display stand according to invention is characterized in that the axis of rotation of the furniture elements mockups is oriented along the width of the moveable support frame.

Furthermore, the display stand according to invention is characterized in that the axis of rotation of the furniture elements mockups is outside the plane of the furniture element mockups.

Furthermore, the display stand according to invention is characterized in that one of the marginal positions of the moveable support frame is the exhibition position of the display stand.

Moreover, the gist of the invention is also a moveable support frame of the display stand for presenting furniture elements is adapted to move along a track, adapted for the mounting of furniture elements mockups. The moveable support frame is further characterized in that it is fitted with a rotatable element adapted to rotate the furniture element mockups from the storage position to the exhibition position. Furthermore, the moveable support frame according to invention is characterized in that the axis of rotation of the furniture element mockups is oriented along with width of the moveable support frame.

Furthermore, the moveable support frame according to invention is characterized in that the axis of rotation of the furniture element mockups is outside the plane of the furniture element mockup.

Furthermore, the moveable support frame according to invention is characterized in that it has at least one limiting element that determines at least one boundary position of the rotatable element.

Furthermore, the moveable support frame according to invention is characterized in that the rotatable element is adapted to perform a full rotation.

Furthermore, the moveable support frame according to invention is characterized in that the rotatable element is a tiltable element.

Furthermore, the moveable support frame according to invention is characterized in that the moveable support frame is a rotatable element rotated using a pneumatic actuator.

Moreover, the gist of the invention is also a method for loading a furniture element mockups onto a moveable support frame with a rotatable element in which the moveable support frame is set in a position relative to the storage unit for the furniture element mockups that allows the furniture element mockup to be loaded onto the moveable support frame from a storage unit, and then the rotatable element of the moveable support frame is set to a position that enables the mockup to be loaded onto the rotatable element, the furniture element mockup is moved from the sample storage unit to the rotatable element of the moveable support frame, and the rotatable element changes the orientation of the furniture element mockup from a storage orientation to an exhibition orientation.

The advantage of this solution is the ability to use simple storage units to store horizontal mockup of furniture elements in an orientation other than horizontal. The rotatable element of the frame allows vertical mockups of furniture elements to be presented from simple storage units through the simple motion of the frame around a single axis. This invention limits or eliminates the need for vertical transport of mockups inside a system, and thus enabling the introduction of a system that uses very heavy mockups, e.g. granite slabs.

The subject of the invention has been depicted using an example scenario in the following figures:
- Fig. 1: The support frame with mounted mockups of furniture elements
- Fig. 2: The support frame with the visible rotatable element of the frame
- Fig. 3: The support frame with the rotatable element of the frame and the storage unit for horizontal mockups of furniture elements in the first embodiment
- Fig. 4: How the rotatable element of the frame rotates
- Fig. 5: The support frame and the storage unit for horizontal mockups of furniture elements in the second embodiment
- Fig. 6: The schematic arrangement of elements of the exhibition stand in the exhibition position

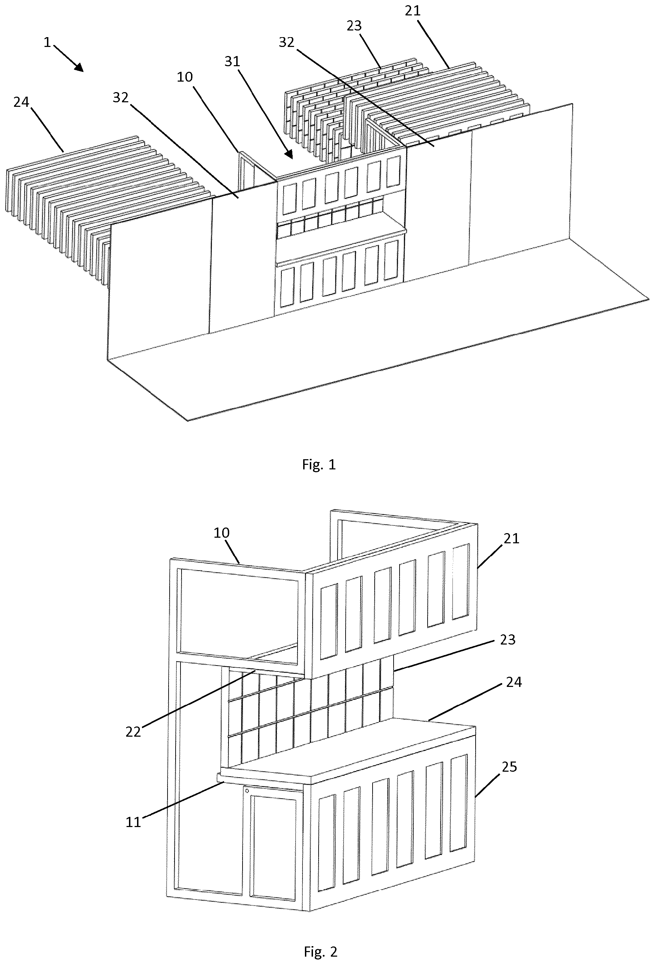

Fig. 1 shows the display stand (1) with visible storage units for furniture elements mockup (21, 23, 24). The display stand (1) has an exhibition opening (31), wherein the moveable support frame (10) which carries the furniture elements mockups is located. The moveable support frame can be either in the exhibition position (Fig. 1), or can move to the back of the display stand (1) along the track. The display stand (1) also has a screen (32) that can cover the exhibition opening (31) during the process of loading and unloading furniture elements mockups (21, 23, 34) to and from the moveable support frame (10). The moveable support frame (10) can move along a straight line, but if necessary can also move along an arc or track in other shape. The shape of the track can be adapted to the shape of the space in which the stand (1) is located. Along the path traversed by the moveable support frame (10) are the storage units for furniture elements mockups (21, 23, 24). The furniture elements mockups (21, 23, 24) are stored there at the same height as the mechanisms for transferring the furniture elements mockups (21, 23, 24) to and from the storage units and the moveable support frame (10). The means for transferring the mockups (21, 23, 24) between the storage unit and the moveable support frame (10) can be mounted on the moveable support frame (10). The means for transferring the mockups (21, 23, 24) can also be mounted outside the moveable support frame (10) and comprise an element of the storage units.

Fig. 2 shows a simplified construction of the moveable support frame (10) with furniture elements mockups (21, 23, 24, 25) in place. The moveable support frame (10) has an openwork construction and is fitted with a guideway (not shown), which allows the furniture elements mockups (21, 23, 24, 25) to be mounted. The furniture elements mockups (21, 23, 24, 25) are mounted onto the moveable support frame (10) such that they are visible through the exhibition opening (31), and that they allow the moveable support frame (10) to move. The furniture elements mockups (21, 23, 24, 25) can be mounted on the frame vertically (21, 23, 25) or horizontally (22, 24). Some furniture elements mockups (22) can also be permanently mounted onto the moveable support frame, which facilitates the mounting of other elements such as lighting, and eliminates unnecessary complications in the construction of the moveable support frame (10). Furniture elements mockups (24) set in the exhibition position horizontally can be loaded onto the rotatable element (11) of the moveable support frame (10), and the orientation of the mockup (24) can be changed after loading.

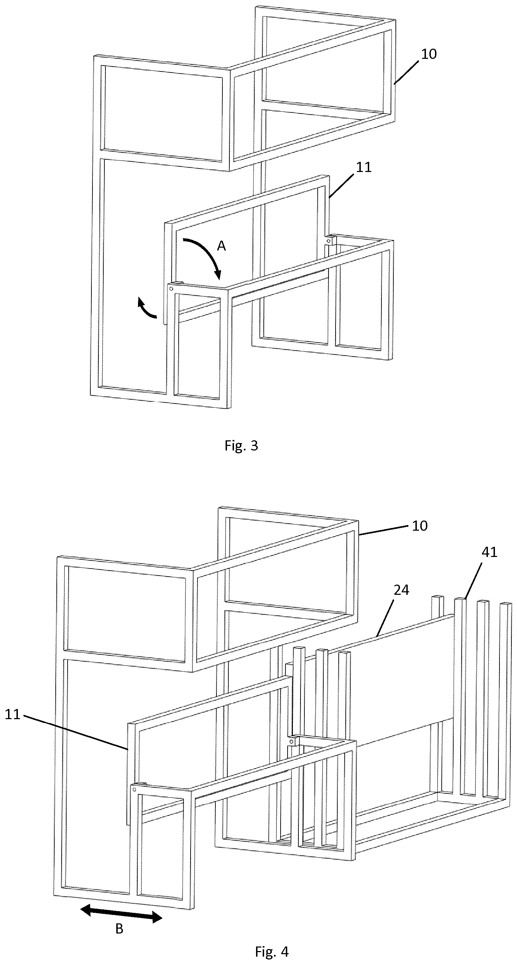

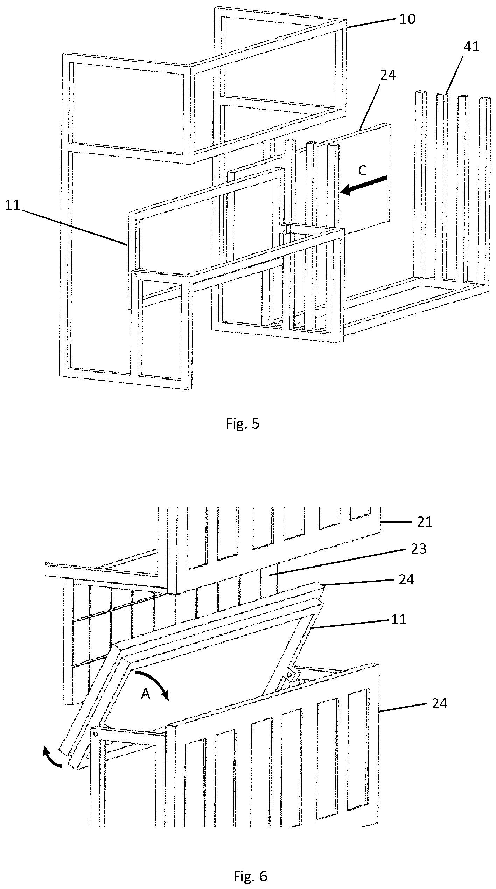

Figures 3-5 show the mounting of a furniture element mockup (24) of horizontal exhibition orientation onto the moveable support frame (10), whereby the sample is transferred from the storage unit for mockups (24) in vertical orientation to the moveable support frame (10). The moveable support frame (10) has a rotatable element (11) capable of performing a rotation (A) on a horizontal axis, while the moveable support frame itself (10) can move in a direction (arrow B) relative to the storage unit for furniture elements mockups (24). The rotatable element (11) can be adapted to perform a full rotation or it can be a tilting element adapted to rotate between two boundary orientations determined by the presence of limiting elements such as part of the moveable support frame (10). The rotation of the rotatable element is carried out around the axis of rotation of the furniture elements mockups (24), which is oriented along the width of the moveable support frame (10) and may be located outside the plane of the furniture element mockups (24). Fig. 4 shows the moveable support frame (10) in a position relative to the storage unit for furniture elements mockups (24) that allows a sample (24) to be loaded onto the rotatable element (11) of the moveable support frame (10). Fig. 5 shows the moment of transfer of the furniture element mockup (24) towards (arrow C) the rotatable element (11) of the moveable support frame (10). A furniture element mockup (24) can be transferred from the storage unit for furniture element mockup (21, 23, 24, 25) using a pneumatic actuator that works together with a gripping mechanism adapted to grip furniture element mockup (21, 23, 24, 25). Mockups (21, 23, 24, 25) move along appropriately adapted guideways in the storage unit for furniture element mockups and along the moveable support frame (10). Additionally, furniture element mockups (21, 23, 24, 25) can have guiding elements that work together with the support elements in the storage unit and the moveable support frame (10).

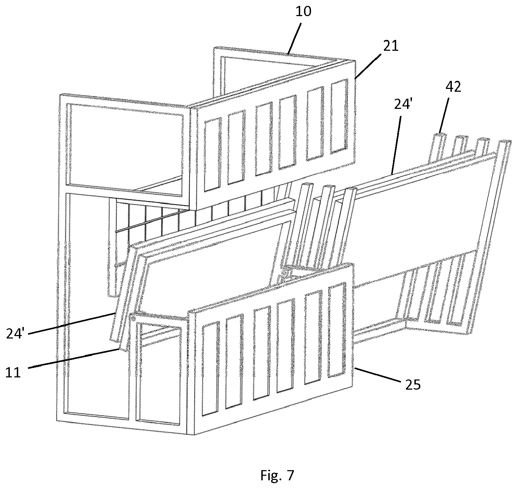

Fig. 6 shows the method for changing the orientation of a furniture element mockup (24) using the rotatable element (11) of the moveable support frame (10). The orientation of the rotatable element (11) enables placement of the furniture element mockup (24) in the storage unit in an orientation other than the orientation of the furniture element mockup (24) in the exhibition position. The orientation of the mockup (24') in the storage unit is called the storage orientation, while the orientation of the mockup (24') when the moveable support frame is in the exhibition position and the arrangement of furniture element mockups (21, 23, 24, 25) is exhibited, is called the exhibition orientation. Fig. 7 shows an example storage unit, in which the mockups (24') are stored tilted at an exemplary angle of 12.5° from the vertical direction. The exact orientation of a furniture element mockups depends on the range of rotation of the rotatable element (11) of the moveable support frame (10), provided that the orientations which allow arrangement of furniture element mockups (24, 24') of the same type in the storage unit at the same height are favorable.

## Claims

1. A display stand (1) for presenting furniture elements containing
at least one storage unit for storing furniture element mockups (21, 23, 24, 24', 25) and a moveable support frame (10) adapted for the mounting of furniture element mockups (21, 23, 24, 24', 25),
the moveable support frame (10) and at least one storage unit for storing furniture element mockups (21, 23, 24, 24', 25) are adapted to move relative to each other, and furthermore
the display stand (1) is fitted with mechanisms for transferring the furniture element mockups (21, 23, 24, 25) to and from the storage unit for furniture element mockups (21, 23, 24, 25) and the moveable support frame (10)
**characterized in that**
the mockups (21, 23, 24, 25) storage unit is adapted to store mockups (21, 23, 24, 24', 25) in such an orientation that the mockups inside the storage unit are stored at the height of the means for transporting the furniture element mockups (21, 23, 24, 24', 25) between the storage unit and the moveable support frame (10);
the moveable support frame (10) is adapted to change the orientation of the mockups (24, 24') coming from at least one of the mockups (24, 24') storage units from that appropriate for placement in the storage unit to that appropriate for display.

2. The display stand according to claim 1, **characterized in that** the axis of rotation of the furniture elements mockups (24, 24') is oriented along the width of the moveable support frame (10).

3. The display stand according to claim 1, **characterized in that** the axis of rotation of the furniture elements mockups (24, 24') is outside the plane of the furniture element mockups (24, 24').

4. The display stand according to claim 1, **characterized in that** one of the marginal positions of the moveable support frame (10) is the exhibition position of the display stand (1).

5. A moveable support frame (10) of the display stand (1) for presenting furniture elements is
adapted to move along a track,
adapted for the mounting of furniture elements mockups (21, 23, 24, 24', 25)
**characterized in that**
it is fitted with a rotatable element (11) adapted to rotate the furniture element mockups from the storage position to the exhibition position.

6. The moveable support frame (10) according to claim 5, **characterized in that** the axis of rotation of the furniture element mockups (24, 24') is oriented along with width of the moveable support frame (10).

7. The moveable support frame (10) according to claim 5, **characterized in that** the axis of rotation of the furniture element mockups (24, 24') is outside the plane of the furniture element mockup (24, 24').

8. The moveable support frame (10) according to claim 5, **characterized in that** it has at least one limiting element that determines at least one boundary position of the rotatable element (11).

9. The moveable support frame (10) according to claim 5, **characterized in that** the rotatable element (11) is adapted to perform a full rotation.

10. The moveable support frame (10) according to claim 5, **characterized in that** the rotatable element (11) is a tiltable element.

11. The moveable support frame (10) according to claim 5, **characterized in that** the moveable support frame (10) is a rotatable element (11) rotated using a pneumatic actuator.

12. A method for loading a furniture element mockups (24, 24') onto a moveable support frame (10) with a rotatable element (11) in which the moveable support frame (10) is set in a position relative to the storage unit for the furniture element mockups that allows the furniture element mockup (24, 24') to be loaded onto the moveable support frame (10) from a storage unit, and then the rotatable element (11) of the moveable support frame (10) is set to a position that enables the mockup (24, 24') to be loaded onto the rotatable element (11), the furniture element mockup (24, 24') is moved from the sample storage unit to the rotatable element (11) of the moveable support frame (10), and the rotatable element (11) changes the orientation of the furniture element mockup (24, 24') from a storage orientation to an exhibition orientation.
